# EUROPEAN PATENT APPLICATION

(11) **EP 3 109 772 A1**
(43) Date of publication of application: **28.12.2016**
(21) Application number: 16171323.5
(22) Date of filing: 25.05.2016
(51) Int. Cl.: G06F 17/27, G06F 3/023

(54) **TEXT INPUT METHOD AND DEVICE**

(30) Priority: 25.06.2015 CN 201510359814
(71) Applicant: Xiaomi Inc., Beijing 100085 (CN)
(72) Inventor: XIANGLI, Fei, 100085 BEIJING (CN); QIAN, Zhuang, 100085 BEIJING (CN); CHEN, Baoke, 100085 BEIJING (CN)
(74) Representative: Perrot, Emilie

(57) **Abstract**

The present invention provides a text input method, including: judging (101) whether a preset string quick-input mode is set; when the preset string quick-input mode is set, detecting (102) a preset operation with respect to a preset character in a character input interface; and when the preset operation with respect to the preset character is detected, inputting (103) a preset string set in the preset string quick-input mode into a text input box.

## Description

### TECHNICAL FIELD

The present invention generally relates to field of communication, and more particularly, to a text input method and device.

### BACKGROUND

With development of smart apparatuses, the smart apparatuses with large screens become more and more popular. However, although the smart apparatuses with large screens are excellent in browsing webpages, pictures and broadcasting videos, with more and more applications of a smart terminal, it is necessary to further optimize the smart terminal.

### SUMMARY

In order to solve the problems existing in the related art, the present invention provides a text input method and device.

According to a first aspect, the invention relates to a text input method, comprising:
judging whether a preset string quick-input mode is set;
when the preset string quick-input mode is set, detecting a preset operation with respect to a preset character in a character input interface; and
when the preset operation with respect to the preset character is detected, inputting a preset string set in the preset string quick-input mode into a text input box.

Optionally, the method further comprises:
receiving a setting operation of starting the preset string quick-input mode in a system input method setting interface; and
starting the preset string quick-input mode.

Optionally, the method further comprises:
after receiving the setting operation of starting the preset string quick-input mode in the system input method setting interface, receiving a string inputted in the system input method setting interface, and using the received string as the preset string.

Optionally, the method further comprises:
after receiving the setting operation of starting the preset string quick-input mode in the system input method setting interface, providing a first setting option for setting the preset character in the system input method setting interface; and
acquiring the preset character set in the first setting option.

Optionally, the step of providing the first setting option for setting the preset character in the system input method setting interface comprises:
providing a preset character list in the system input method setting interface, preset characters in the preset character list being obtained based on an input habit of a user and a character layout on a home page of the character input interface; and
the step of acquiring the preset character set in the first setting option includes:
   acquiring a selected character of the preset character list, and using the selected character as the preset character.

Optionally, the method further comprises:
after receiving the setting operation of starting the preset string quick-input mode in the system input method setting interface, providing a second setting option for setting the preset operation in the system input method setting interface, the second setting option including a preset operation list provided in advance; and
acquiring a selected operation of the preset operation list, and using the selected operation as the preset operation.

Optionally, when a plurality of preset strings are set in the preset string quick-input mode, the step of inputting the preset string set in the preset string quick-input mode into the text input box comprises:
outputting the plurality of preset strings in a preset position of the text input box;
acquiring a preset string selected by a user; and
inputting the preset string selected by the user into the text input box.

According to a second aspect, the invention relates to a text input device, comprising:
a judgment module configured to judge whether a preset string quick-input mode is set;
a detection module configured to, when the preset string quick-input mode is set, detect a preset operation with respect to a preset character in a character input interface; and
an input module configured to, when the preset operation with respect to the preset character is detected, input a preset string set in the preset string quick-input mode into a text input box.

Optionally, the device further comprises:
a first receiving module configured to receive a setting operation of starting the preset string quick-input mode in a system input method setting interface; and
a starting module configured to start the preset string quick-input mode.

Optionally, the device further comprises:
a second receiving module configured to, after receiving the setting operation of starting the preset string quick-input mode in the system input method setting interface, receive a string inputted in the system input method setting interface, and use the received string as the preset string.

Optionally, the device further comprises:
a first providing module configured to, after receiving the setting operation of starting the preset string quick-input mode in the system input method setting interface, provide a first setting option for setting the preset character in the system input method setting interface; and
a first acquiring module configured to acquire the preset character set in the first setting option.

Optionally, the first providing module comprises:
a providing submodule configured to, after receiving the setting operation of starting the preset string quick-input mode in the system input method setting interface, provide a preset character list in the system input method setting interface, preset characters in the preset character list being obtained based on an input habit of a user and a character layout on a home page of the character input interface; and
the first acquiring module includes:
   a first acquiring submodule configured to acquire a selected character of the preset character list, and use the selected character as the preset character.

Optionally, the device further comprises:
a second providing module configured to, after receiving the setting operation of starting the preset string quick-input mode in the system input method setting interface, provide a second setting option for setting the preset operation in the system input method setting interface, the second setting option including a preset operation list provided in advance; and
a second acquiring module configured to acquire a selected operation of the preset operation list, and use the selected operation as the preset operation.

Optionally, when a plurality of preset strings are set in the preset string quick-input mode, the input module comprises:
an output submodule configured to, when the preset operation with respect to the preset character is detected, output the plurality of preset strings in a preset position of the text input box;
a second acquiring submodule configured to acquire a preset string selected by a user; and
an input submodule configured to input the preset string selected by the user into the text input box.

According to a third aspect, the invention relates to a text input device, comprising:
a processor; and
a memory for storing instructions executable by the processor;
wherein the processor is configured to:
   judging whether a preset string quick-input mode is set;
   when the preset string quick-input mode is set, detecting a preset operation with respect to a preset character in a character input interface; and
   when the preset operation with respect to the preset character is detected, inputting a preset string set in the preset string quick-input mode into a text input box.

In one particular embodiment, the steps of the text input method are determined by computer program instructions.

Consequently, according to a fourth aspect, the invention is also directed to a computer program for executing the steps of a text input method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present invention may have the following beneficial effects:
in the above embodiments, by judging whether the preset string quick-input mode is set, when the preset string quick-input mode is set, a preset operation with respect to a preset character in a character input interface is detected, and when detecting the preset operation with respect to the preset character, ithe preset string set in the preset string quick-input mode is inputted into the text input box. The user may utilize the preset characters in the character input interface to quickly input a relatively long text, reduce the complexity of operation when using the input method of the mobile terminal, and thereby improve the text input experience of the user.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a text input method, according to an exemplary embodiment.
Fig. 2 is a flow chart of another text input method, according to an exemplary embodiment.
Fig. 3 is a schematic diagram of setting a string quick-input mode, according to an exemplary embodiment.
Fig. 4 is a block diagram of a text input device, according to an exemplary embodiment.
Fig. 5 is a block diagram of another text input device, according to an exemplary embodiment.
Fig. 6 is a block diagram of yet another text input device, according to an exemplary embodiment.
Fig. 7 is a block diagram of a text input device, according to an exemplary embodiment.
Fig. 8 is a block diagram of another text input device, according to an exemplary embodiment.
Fig. 9 is a block diagram of yet another text input device, according to an exemplary embodiment.
Fig. 10 is a block diagram of still yet another text input device, according to an exemplary embodiment.
Fig. 11 is a block schematic diagram of a text input device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

The terms used in the present invention only tend to depict specific embodiments, rather than restricting the present invention. Unless the exceptional case in which the context clearly gives supports, the singular forms "a", "an", and "the" used in the present invention and accompany claims are intended to include the plural forms. It should also be appreciated that the expression "and/or" used herein indicates including any and all possible combinations of one or more of the associated listed items.

It should be understood, although terms first, second, third and the like are used in the present invention to depict various information, such information is not restricted by these terms. These terms are only used to distinguish information of the same type from each other. For example, without departing from the scope of the present invention, the first information may also be referred to as the second information. Similarly, the second information may also be referred to as the first information. Depending on context, the word "if" used herein may be explained to "when" or "upon" or "in response to determining ..."

During daily usage of a smart apparatus with a large screen, the user often needs to repeatedly input some relatively long character text, for example, when logging in some applications installed in the apparatus, the user generally uses an email address as a login account of the user. Therefore, it is a text input scenario encountered by all users every day that the user inputs an email address via an input method. In such scenario, if the user uses a uniform login account in various applications, he/she often needs to repeatedly input the same email address.

In order to improve an input experience of the user, in the related art, a function of "text favorites folder" has been introduced in the input method, and the user may save several frequently-used words and/or phases in the "text favorites folder". In this way, when needing to input a relevant word and/or phase, the word and/or phase may be directly selected from the text favorites folder. However, in such solution, in general, an application interface of the text favorites folder is deep, and is not intuitive enough, and there are generally many frequently-used phrases saved in the text favorites folder, which is inconvenient for the user to look up, thereby the popular degree is very low.

Therefore, the present invention provides a method for inputting text. In the method, by judging whether a preset string quick-input mode is set, if the preset string quick-input mode is set, a preset operation with respect to a preset character in a character input interface is detected, and when detecting the preset operation with respect to the preset character, a preset string set in the preset string quick-input mode is input in a text input box. In this way, the user may quickly input a relatively long text by utilizing the preset character through the character input interface. Accordingly, the operational complexity of using the input method of a mobile terminal is relieved, and thus the text input experience of the user is improved.

In an example, the preset character is "e" and the preset string is "example". When the preset character "e" is input in the character input interface, the preset string "example" is input in the text input box.

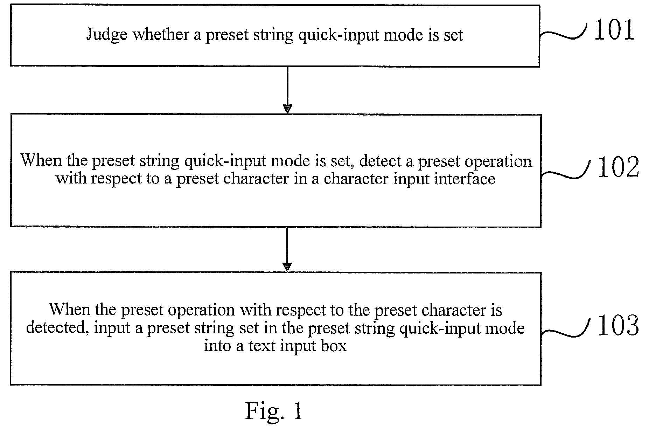

Fig. 1 is a flow chart of a text input method, according to an exemplary embodiment. As shown in Fig. 1, the text input method is performed by a terminal, and includes the following steps.

In step 101, whether a preset string quick-input mode is set is judged.

In step 102, when the preset string quick-input mode is set, a preset operation with respect to a preset character in a character input interface is detected.

In step 103, when the preset operation with respect to the preset character is detected, a preset string set in the preset string quick-input mode is inputted into a text input box.

In the present embodiment, the terminal may be a mobile terminal of a user. For example, the mobile terminal may be a smart mobile phone, a tablet computer, and the like of the user. The character input interface may be an input method input interface on the mobile terminal, for example, may be a soft keyboard on the smart mobile phone.

During usage of the mobile terminal, if the user needs to input a character text in a system interface, he/she may generally call a soft keyboard of the input method on the mobile terminal, then input the character text by operating the soft keyboard. However, in course of using the mobile terminal daily, the user may often repeatedly input some relatively long character text; for example, if the user uses an email address as a uniform login account of various applications in the mobile terminal, then during daily usage, the user may often need to repeatedly input the same email address.

Thereby, in such usage scenario, the repeated input may affect the user experience, and when the user carries out inputting by operating the soft keyboard, problems of error input or poor input experience may occurre due to limitation of hardware conditions. For example, as to the mobile terminal with a relatively small screen, when inputting by using the soft keyboard, the user may input mistakenly due to a relatively small space of the soft keyboard; and as to the mobile terminal with a large screen, since generally a smooth glass mirror is adopted for enhancing a viewing experience of the user when browsing webpages, pictures, and videos, the input experience is poor when the user inputs a relatively long character text by operating the soft keyboard on the mobile terminal with a large screen.

In order to solve the above problems, a string quick-input mode may be preset in an interface for setting a system input method (i.e., a system input method setting interface) on the mobile terminal, and a preset string needing to be quickly inputted and a preset character, which are set by the user in the string quick-input mode, are acquired. In this way, when the user performs a preset operation with respect to the preset character on the soft keyboard, the system may be automatically triggered to input the preset string set by the user in the string quick-input mode into an input box. Thereby the user may quickly input the preset string by operating the designated character on the soft keyboard.

In the present embodiment, when starting a string quick-input, a function option for starting the string quick-input mode may be preset in the system input method setting interface, and the user may start the string quick-input mode by operating the function option. For example, as to the touch-screen mobile terminal, the user may touch the function option in the system input method setting interface, so as to start the string quick-input mode.

Hereinafter, detailed explanations will be given by using an example in which the above function is achieved in a touch-screen mobile terminal. Certainly, achieving the above function in the touch-screen mobile terminal is only illustrative, and in actual applications, equal implementations may be carried out on a non-touch screen mobile terminal according to the following detailed implementing procedure.

When implementing on the touch-screen mobile terminal, the mobile terminal may monitor in a background in real time a touch event with respect to the function option in the system input method setting interface, performed by a user. When a touch event with respect to the function option, performed by the user, is monitored, the mobile terminal may determine in the background that the string quick-input mode has been set at present, and thus the string quick-input mode may be started.

After the mobile terminal starts the string quick-input mode in the background, the user may set a preset string needing to be quickly inputted in the system input method setting interface. At the same time, the mobile terminal may, in the background, receive in real time a string inputted by the user in the system input method setting interface, and set the received string as the preset string in the string quick-input mode.

When the user sets the preset string in the system input method setting interface, the mobile terminal may provide a preset string-input box in the system input method setting interface for the user, and the user may input a string in the string-input box, then the mobile terminal may acquire the string inputted in the string-input box by the user, and then set the acquired string as the preset string in the string quick-input mode in the background.

Certainly, during implementation, the user may also set a plurality of preset strings in the system input method setting interface. For example, in case of inputting a plurality of strings in the above string-input box, when continuously inputting the multiple strings, the user may separate the continuously inputted multiple strings by specific separator characters, and when the mobile terminal acquires the strings inputted by the user in the background, the mobile terminal may automatically identify the strings inputted by the user to be multiple according to the separator characters.

In the present embodiment, in addition to setting the string needing to be quickly inputted in the string quick-input mode in the system input method setting interface, the user may also set a preset character for triggering the string quick-input mode in the system input method setting interface.

When the user sets a preset character for triggering the string quick-input in the system input method setting interface, the mobile terminal may provide the user with a first setting option for setting the preset character in the system input method setting interface.

During implementation, the first setting option may be a preset character list, in which several preset characters may be included. When setting the preset character, the user may directly select a preset character needing to be set from the preset character list, and at the same time, the mobile terminal may acquire the character selected by the user from the preset character list, and set the acquired character as the preset character for triggering the string quick-input in the background.

The preset characters in the preset character list may be selected from the input method soft keyboard randomly, or may be obtained based on an input habit of the user and a character layout on a home page of the soft keyboard. For example, as to the touch-screen mobile terminal, the mobile terminal collects points touched by the user during usage of the terminal in the background (touching points), then analyze the usage habit of the user in the background according to the touching points of the user, for example, on basis of coordinates of the collected touching points, whether the user is used to operate by left hand or operate by right hand may be analyzed. When the mobile terminal analyzes the usage habit of the user in the background, the character layout on the input method soft keyboard may be read out, and in combination with the usage habit of the user, characters which are more suitable for the usage habit of the user are read out from the soft keyboard and are putted into the above preset character list for selection by the user. For example, assuming that the mobile terminal analyzes that the user is a left-hand user, then the characters to the left side on the home page of the input method soft keyboard may be putted into the above preset character list for selection by the user. In this way, when the user sets the preset characters in the string quick-input mode, the usage habit of the user may be sufficiently adapted.

In the present embodiment, in addition to setting the strings needing to be quickly inputted in the string quick-input mode and the preset character in the system input method setting interface, the user may also set a preset operation for triggering the string quick-input in the system input method setting interface.

When the user sets a preset operation for triggering the string quick-input in the system input method setting interface, the mobile terminal may provide the user with a second setting option for setting the preset operation in the system input method setting interface.

During implementation, the second setting option may be a preset operation list, in which several preset operations may be included. For example, the several preset operations may include a long-press operation, a double-click operation, and the like. When setting the preset operation, the user may directly select a preset operation needing to be set from the preset operation list, and at the same time, the mobile terminal may, in the background, acquire the operation selected by the user from the preset operation list, and set the acquired operation as the preset operation for triggering the string quick-input.

In the present embodiment, a confirmation option may be included in the system input method setting interface. For example, the confirmation option may be a confirmation button, and after the user respectively sets the preset string, the preset character and the preset operation in the system input method setting interface, confirmation may be set by clicking the confirmation button upon the complete of the setting.

After the user sets the confirmation by clicking the confirmation button to start the string quick-input mode, the mobile terminal may, in the background, detect in real time an operation with respect to the input method soft keyboard, performed by the user, and judge whether the detected operation is a preset operation (such as a long-press operation) with respect to a preset character on the soft keyboard, performed by the user. If the detected operation is a preset operation with respect to a preset character on the soft keyboard, the mobile terminal may be triggered to call the preset string which has been set by the user, and quickly input the preset string into a text input box in the background.

By this way, the user may quickly input the preset string set in the string quick-input mode by the user by performing a preset operation to a designated character on the soft keyboard, thereby improving the text input experience of the user.

In the above embodiments, by judging whether the preset string quick-input mode is set, when the preset string quick-input mode is set, a preset operation with respect to a preset character in a character input interface is detected, and when the preset operation with respect to the preset character is detected, the preset string set in the preset string quick-input mode is inputted into the text input box. The user may utilize the preset characters in the character input interface to quickly input a relatively long text, reduce the complexity of operation when using the input method of the mobile terminal, and thereby improve the text input experience of the user.

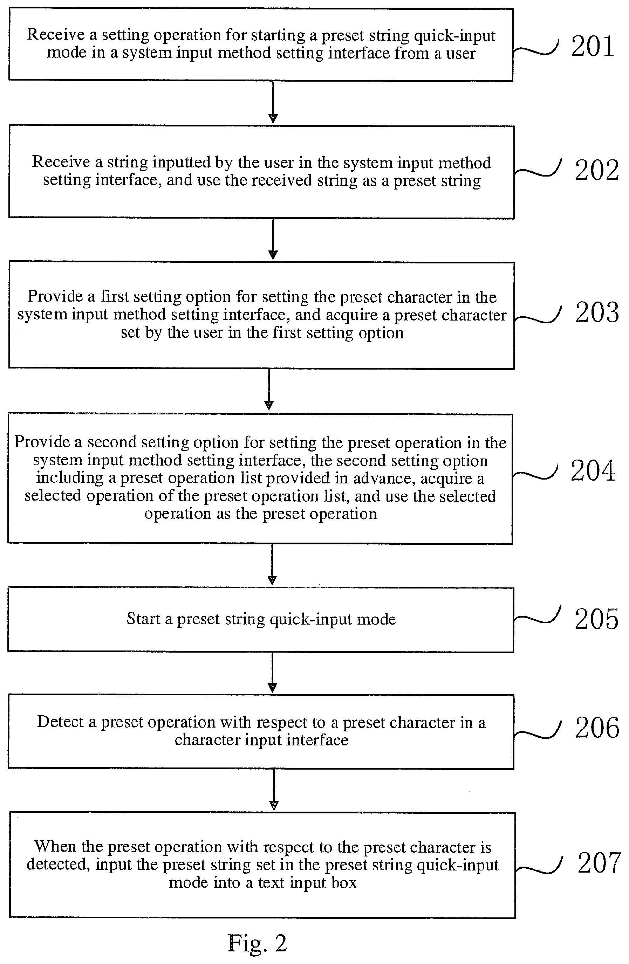

Fig. 2 is a flow chart of another text input method, according to an exemplary embodiment. As shown in Fig. 2, the method is performed by a terminal, and includes the following steps.

In step 201, a setting operation, for starting a preset string quick-input mode in a system input method setting interface, is received from a user.

In step 202, a string inputted by the user in the system input method setting interface is received, and the received string is used as a preset string.

In step 203, a first setting option for setting a preset character is provided in the system input method setting interface, and the preset character set by the user in the first setting option is acquired.

In step 204, a second setting option for setting a preset operation is provided in the system input method setting interface, the second setting option including a preset operation list provided in advance, a selected operation of the preset operation list, input by the user, is acquired, and the selected operation is used as the preset operation.

In step 205, a preset string quick-input mode is started.

In step 206, a preset operation with respect to a preset character in a character input interface is detected.

In step 207, when the preset operation with respect to the preset character is detected, a preset string set in the preset string quick-input mode is inputted into a text input box.

In the present embodiment, the terminal may be a mobile terminal of a user. For example, the mobile terminal may be a smart mobile phone, a tablet computer, and the like of the user. The character input interface may be an input method input interface on the mobile terminal. For example, the character input interface may be a soft keyboard on the smart mobile phone.

During usage of the mobile terminal, if the user needs to input a character text in a system interface, he/she may generally call a soft keyboard of the input method on the mobile terminal, then input the character text by operating the soft keyboard. However, in course of daily using the mobile terminal, the user may often repeatedly input some relatively long character text; for example, if the user uses an email address as a uniform login account of various applications in the mobile terminal, then during daily usage, the user may often need to repeatedly input the same email address.

Thereby, in such usage scenario, the repeated input may affect the user experience, and when the user carries out inputting by operating the soft keyboard, problems of error input or poor input experience may occurre due to limitation of hardware conditions. For example, as to the mobile terminal with a relatively small screen, when inputting by using the soft keyboard, the user may input mistakenly due to a relatively small space on the soft keyboard; and as to the mobile terminal with a large screen, since generally a smooth glass mirror is adopted for enhancing a viewing experience of the user when browsing webpages, pictures, and videos, the input experience is poor when the user inputs a relatively long character text by operating the soft keyboard on the mobile terminal with a large screen.

In order to solve the above problems, a string quick-input mode may be preset in a system input method setting interface in the mobile terminal, and a preset string needing to be quickly inputted and a preset character, which are set by the user in the string quick-input mode, are acquired. In this way, when the user performs a preset operation with respect to the preset character on the soft keyboard, the system may be automatically triggered to input the preset string set by the user in the string quick-input mode into an input box. Thereby the user may quickly input a preset string by operating a designated character on the soft keyboard.

In the present embodiment, when starting a string quick-input, a function option of starting the string quick-input mode may be preset in the system input method setting interface, and the user may start the string quick-input mode by operating the function option. For example, as to the touch-screen mobile terminal, the user may touch the function option in the system input method setting interface, so as to start the string quick-input mode.

Hereinafter, detailed explanations will be given by using an example in which the above function is achieved in a touch-screen mobile terminal. Certainly, achieving the above function in the touch-screen mobile terminal is only illustrative, and in actual applications, equal implementations may be carried out on a non-touch screen mobile terminal according to the following detailed implementing procedure.

When implementing on the touch-screen mobile terminal, the mobile terminal may monitor in a background in real time a touch event with respect to the function option in the system input method setting interface, performed by a user. When a touch event with respect to the function option, performed by the user, is monitored, the mobile terminal may determine that the string quick-input mode has already be set, thus the string quick-input mode may be started in the background.

After the mobile terminal starts the string quick-input mode in the background, the user may set a preset string needing to be quickly inputted in the system input method setting interface. At the same time, the mobile terminal may receive in real time in the background a string inputted by the user in the system input method setting interface, and set the received string as the preset string in the string quick-input mode.

When the user sets the preset string in the system input method setting interface, the mobile terminal may provide a preset string-input box in the system input method setting interface for the user, and the user may input a string in the string-input box, then the mobile terminal may acquire the string inputted in the string-input box by the user in the background, and then set the acquired string as the preset string in the string quick-input mode.

Certainly, during implementation, the user may also set a plurality of preset strings in the system input method setting interface. For example, in case of inputting a plurality of strings in the above string-input box, when continuously inputting the multiple strings, the user may separate the continuously inputted multiple strings by specific separator characters, and when the mobile terminal acquires the string inputted by the user in the background, the mobile terminal may automatically identify the strings inputted by the user to be multiple according to the separator characters.

In the present embodiment, in addition to setting the string needing to be quickly inputted in the string quick-input mode in the system input method setting interface, the user may also set a preset character for triggering the string quick-input mode in the system input method setting interface.

When the user set a preset character for triggering the string quick-input mode in the system input method setting interface, the mobile terminal may provide the user with a first setting option for setting the preset character in the system input method setting interface.

During implementation, the first setting option may be a preset character list, in which several preset characters may be included. When setting the preset character, the user may directly select a preset character needing to be set from the preset character list, and at the same time, the mobile terminal may acquire the character selected by the user from the preset character list in the background, and set the acquired character as the preset character for triggering the string quick-input.

The preset characters in the preset character list may be selected from the input method soft keyboard randomly, or may be obtained based on an input habit of the user and a character layout on a home page of the soft keyboard. For example, as to the touch-screen mobile terminal, the mobile terminal collects points touched by the user during usage of the terminal in the background (touching points), then analyze the usage habit of the user in the background according to the touching points of the user, for example, on basis of coordinates of the collected touching points, whether the user is used to operate by left hand or operate by right hand may be analyzed. When the mobile terminal analyzes the usage habit of the user in the background, the character layout on the input method soft keyboard may be read out, and in combination with the usage habit of the user, characters which are more suitable for the usage habit of the user are read out from the soft keyboard and are putted into the above preset character list for selection by the user. For example, assuming that the mobile terminal analyzes that the user is a left-hand user, then the characters to the left side on the home page of the input method soft keyboard may be putted into the above preset character list for selection by the user. In this way, when the user sets the preset characters in the string quick-input mode, the usage habit of the user may be sufficiently adapted.

In the present embodiment, in addition to setting the string needing to be quickly inputted in the string quick-input mode and the preset character in the system input method setting interface, the user may also set a preset operation for triggering the string quick-input in the system input method setting interface.

When the user sets a preset operation for triggering the string quick-input in the system input method setting interface, the mobile terminal may provide the user with a second setting option for setting the preset operation in the system input method setting interface.

During implementation, the second setting option may be a preset operation list, in which several preset operations may be included. For example, the several preset operations may include a long-press operation, a double-click operation, and the like. When setting the preset operation, the user may directly select a preset operation needing to be set from the preset operation list, and at the same time, the mobile terminal may, in the background, acquire the operation selected by the user in the preset operation list, and set the acquired operation as the preset operation for triggering the string quick-input.

In the present embodiment, a confirmation option may be included in the system input method setting interface. For example, the confirmation option may be a confirmation button, and after the user respectively sets a preset string, a preset character and a preset operation in the system input method setting interface, confirmation may be set by clicking the confirmation button when the setting is completed.

After the user sets the confirmation by clicking the confirmation button to start the string quick-input mode, the mobile terminal may, in the background, detect in real time an operation with respect to the input method soft keyboard, performed by the user, and judge whether the detected operation is a preset operation (such as a long-press operation) with respect to a preset character on the soft keyboard performed by the user. If the detected operation is a preset operation with respect to a preset character on the soft keyboard, the mobile terminal may be triggered to call the preset string which have been set by the user, and quickly input the preset string into a text input box in the background.

By this way, the user may quickly input the preset string set in the string quick-input mode by the user by performing a preset operation to a designated character on the soft keyboard, thereby improving the text input experience of the user.

Hereinafter, by an application example in combination with the above application scenario, the detailed explanations of the technical solutions in the above embodiments are given.

In the present embodiment, the above preset character may be @ character on the input method soft keyboard, the above preset string may be an email address used by the user as the login account, and the above preset operation may be a long-press operation.

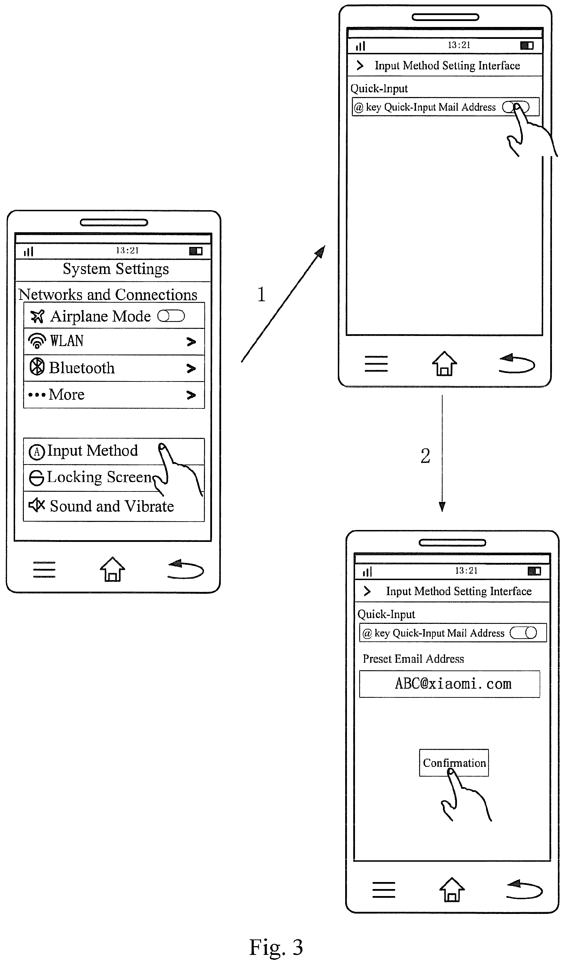

Fig. 3 is a schematic diagram of interactions of setting a preset string by a user, according to an exemplary embodiment.

As shown in Fig. 3, in a system setting interface, an "Input Method" setting option may be included. The user may touch this setting option to trigger the system to jump to the system input method setting interface.

In the system input method setting interface, a function option of "@ key quick-input email address" may be included. The user may touch an open switch of the function option to turn on the string quick-input mode, and trigger the system to output an input box for setting a preset string to the user, then the user may set a quick-input email address in the input box.

In the input method setting interface, a confirmation button may be included. After inputting a quick-input email address in the input box, the user may touch the confirmation button to start the string quick-input mode.

After starting the string quick-input mode, when the user inputs an email address in a login interface of an application, he/she may quickly input the email address by long pressing @ character on the soft keyboard.

The system of the mobile terminal may monitor in real time the touch event with respect to the soft keyboard performed by the user in the background, and when a long-press event to @ character on the soft keyboard performed by the user is monitored, the system may immediately call the quick-input email address having been set by the user in the background, and then automatically fill the email address into a user name input box in the login interface, so as to complete the quick-input of the login name.

In the above embodiments, by judging whether a preset string quick-input mode is set, if the preset string quick-input mode is set, a preset operation with respect to a preset character in a character input interface is detected, and when the preset operation with respect to the preset character is detected, a preset string set in the preset string quick-input mode is inputted into a text input box. The user may quickly input a relatively long text by utilizing the preset character in the character input interface, the operating complexity by using the input method of the mobile terminal is relieved, and thus the text input experience of the user is improved.

Corresponding to the embodiments relating to the above text input method, the present invention also provides embodiments relating to device.

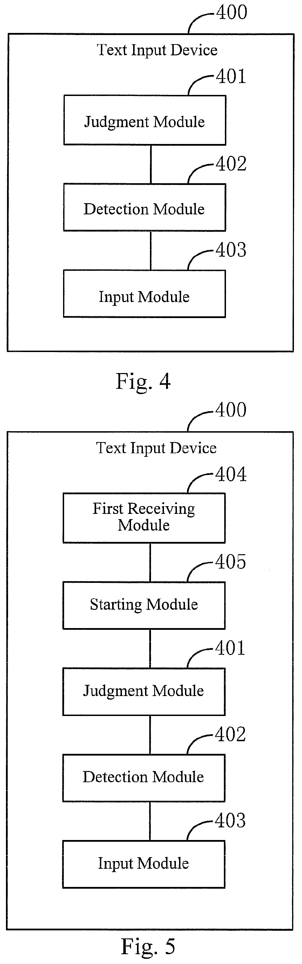

Fig. 4 is a block diagram of a text input device, according to an exemplary embodiment.

As shown in Fig. 4, a text input device 400 illustrated according to an exemplary embodiment includes a judgment module 401, a detection module 402, and an input module 403.

The judgment module 401 is configured to judge whether a preset string quick-input mode is set.

The detection module 402 is configured to, when the preset string quick-input mode is set, detect a preset operation with respect to a preset character in a character input interface.

The input module 403 is configured to, when the preset operation with respect to the preset character is detected, input a preset string set in the preset string quick-input mode into a text input box.

In the above embodiments, by judging whether a preset string quick-input mode is set, if the preset string quick-input mode is set, a preset operation with respect to a preset character in a character input interface is detected, and when the preset operation with respect to the preset character is detected, a preset string set in the preset string quick-input mode is inputted into a text input box. The user may quickly input a relatively long text by utilizing the preset character in the character input interface, and thus the text input experience of the user is improved.

Fig. 5 is a block diagram of another device, according to an exemplary embodiment. As shown in Fig. 5, on the basis of the above embodiment shown in Fig. 4, the device 400 in the present embodiment further includes a first receiving module 404 and a starting module 405.

The first receiving module 404 is configured to receive a setting operation for starting the preset string quick-input mode in a system input method setting interface, performed by a user.

The starting module 405 is configured to start the preset string quick-input mode.

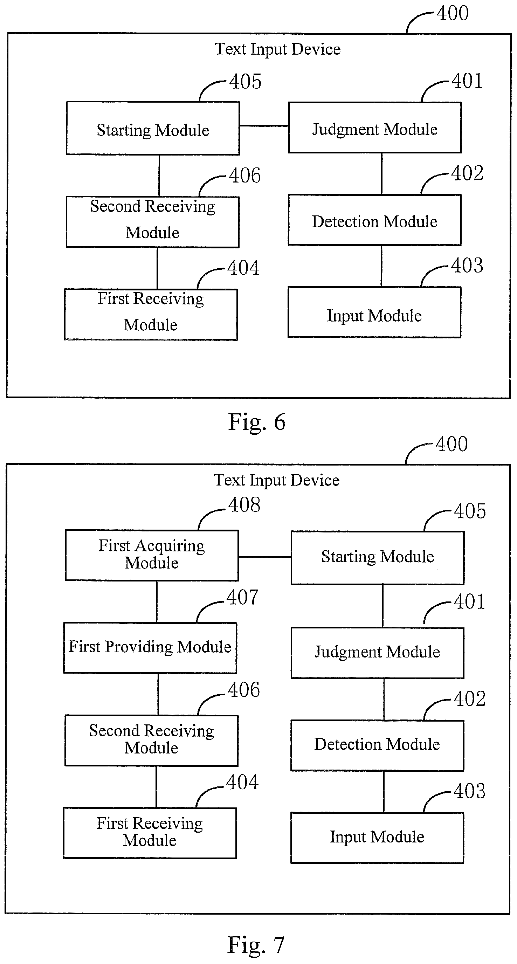

Fig. 6 is a block diagram of yet another text input device, according to an exemplary embodiment. As shown in Fig. 6, on the basis of the above embodiment shown in Fig. 5, the device 400 in the present embodiment may further include a second receiving module 406.

The second receiving module 406 is configured to, after receiving the setting operation for starting the preset string quick-input mode in the system input method setting interface performed by the user, receive a string inputted by the user in the system input method setting interface, and use the received string as the preset string.

It should be explained, the structure of the second receiving module 406 shown in the above device embodiment in Fig. 6 may also be included in the above device embodiment in Fig. 4, which is not restricted by the present invention.

Fig. 7 is a block diagram of another text input device, according to an exemplary embodiment. As shown in Fig. 7, on the basis of the above embodiment shown in Fig. 5, the device 400 in the present embodiment may further include a first providing module 407 and a first acquiring module 408.

The first providing module 407 is configured to, after receiving the setting operation for starting the preset string quick-input mode in the system input method setting interface performed by the user, provide a first setting option for setting the preset character in the system input method setting interface.

The first acquiring module 408 is configured to receive a preset character set by the user in the first setting option.

It should be explained, the structures of the first providing module 407 and the first acquiring module 408 shown in the above device embodiment in Fig. 7 may also be included in the above device embodiments in Figs. 4 and 6, which is not restricted by the present invention.

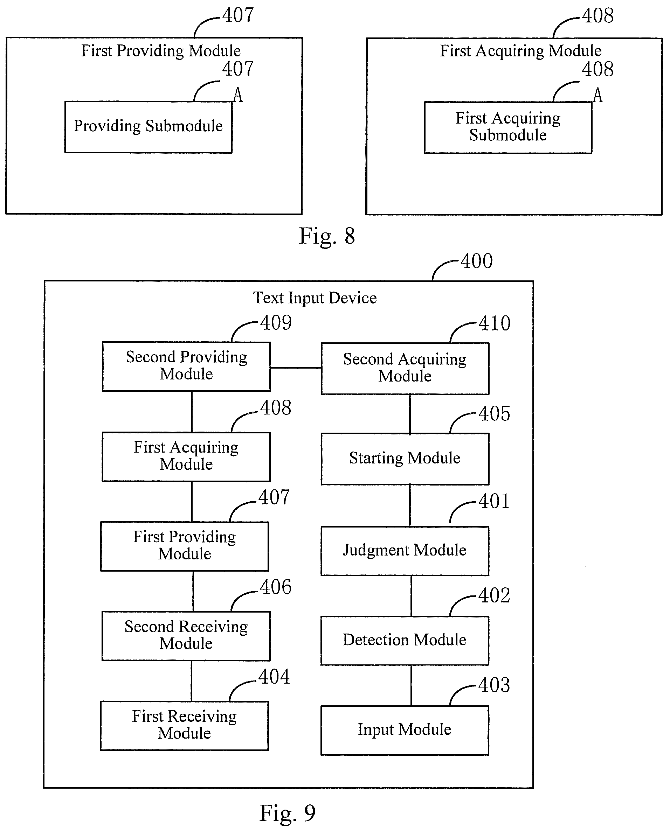

Fig. 8 is a block diagram of another text input device, according to an exemplary embodiment. As shown in Fig. 8, on the basis of the above embodiment shown in Fig. 7, the first providing module 407 may include a providing submodule 407A, and the first acquiring module 408 may include a first acquiring submodule 408A.

The providing submodule 407A is configured to, after receiving the setting operation for starting the preset string quick-input mode in the system input method setting interface performed by the user, provide a preset character list in the system input method setting interface, preset characters in the preset character list being obtained based on an input habit of the user and a character layout on a home page of the character input interface.

The first acquiring submodule 408A is configured to acquire a selected input to the preset character list performed by the user, and use the selected character as the preset character.

It should be explained, the structures of the providing submodule 407A and the first acquiring submodule 408A shown in the above device embodiment in Fig. 8 may also be included in the above device embodiments in Figs. 4 and 6, which is not restricted by the present invention.

Fig. 9 is a block diagram of yet another text input device, according to an exemplary embodiment. As shown in Fig. 9, on the basis of the above embodiment shown in Fig. 5, the device 400 in the present embodiment may further include a second providing module 409 and a second acquiring module 410.

The second providing module 409 is configured to, after receiving the setting operation for starting the preset string quick-input mode in the system input method setting interface performed by the user, provide a second setting option for setting the preset operation in the system input method setting interface, the second setting option including a preset operation list provided in advance.

The second acquiring module 410 is configured to acquire a selected operation of the preset operation list, input by the user, and use the selected operation as the preset operation.

It should be explained, the structures of the second providing module 409 and the second acquiring module 410 shown in the above device embodiment in Fig. 9 may also be included in the above device embodiments in Figs. 4 and 6-8, which is not restricted by the present invention.

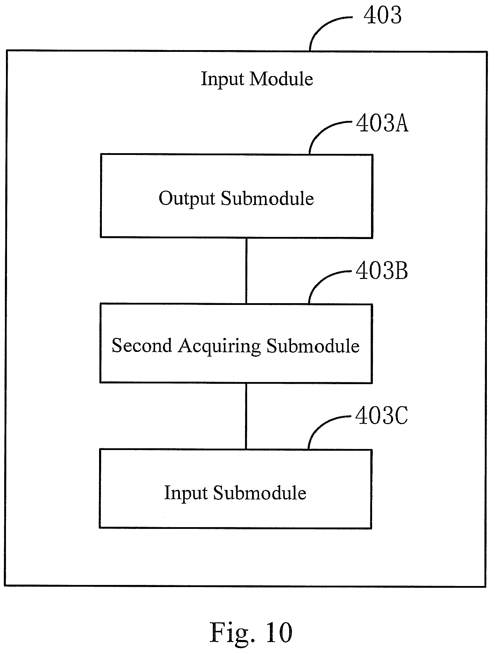

Fig. 10 is a block diagram of still yet another text input device, according to an exemplary embodiment. As shown in Fig. 10, on the basis of the above embodiment shown in Fig. 4, when a plurality preset strings are set in the preset string quick-input mode, the input module 403 may include an output submodule 403A, a second acquiring submodule 403B and an input submodule 403C.

The output submodule 403A is configured to, when a preset operation with respect to a preset character is detected, output the plurality of preset strings in a preset position of a text input box.

The second acquiring submodule 403B is configured to acquire a preset string selected by the user.

The input submodule 403C is configured to input the preset string selected by the user into the text input box.

It should be explained, the structures of the output submodule 403A, the second acquiring submodule 403B and the input submodule 403C shown in the above device embodiment in Fig. 10 may also be included in the above device embodiments in Figs. 5 and 9, which is not restricted by the present invention.

With respect to the devices in the above embodiments, the specific manners for performing operations for individual modules therein have been described in detail in the embodiments regarding the methods, which will not be elaborated herein.

For device embodiments, since the device embodiments are substantially corresponding to the method embodiments, the relevant contents may be referred to some explanations in the method embodiments. The units illustrated as separate components may be or may not be separated physically, the component used as a unit display may be or may not be a physical unit, i.e., may be located at one location, or may be distributed into multiple network units. A part or all of the modules may be selected to achieve the purpose of the solution in the present invention according to actual requirements. The person skilled in the art can understand and implement the present invention without paying inventive labor.

Correspondingly, the present invention further provides a text input device, including:
a processor; and
a memory for storing instructions executable by the processor;
wherein the processor is configured to:
   judging whether a preset string quick-input mode is set;
   when the preset string quick-input mode is set, detecting a preset operation with respect to a preset character in a character input interface; and
   when detecting the preset operation with respect to the preset character, inputting a preset string set in the preset string quick-input mode into a text input box.

Correspondingly, the present invention also provides a terminal, the terminal includes: a memory; and one or more program, wherein the one or more programs is stored in the memory, and instructions for carrying out the following operations contained in the one or more programs are configured to be performed by one or more processor:
judging whether a preset string quick-input mode is set;
when the preset string quick-input mode is set, detecting a preset operation with respect to a preset character in a character input interface; and
when detecting the preset operation with respect to the preset character, inputting a preset string set in the preset string quick-input mode into a text input box.

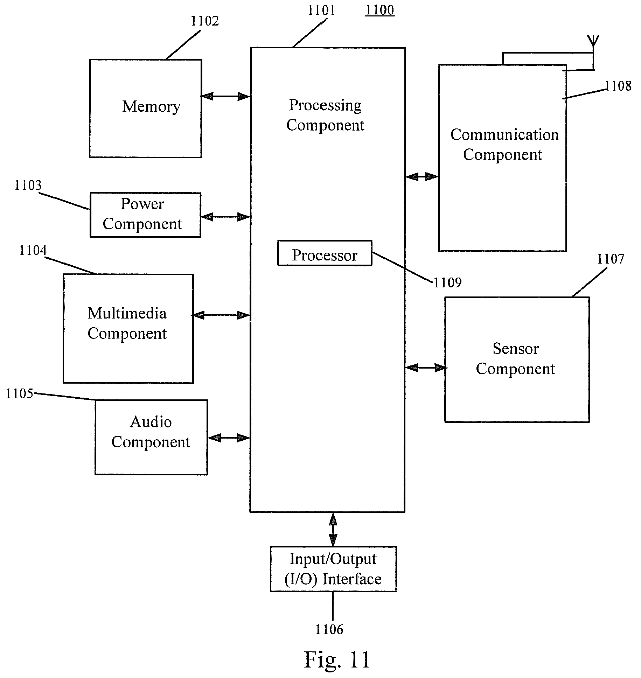

Fig. 11 is a block schematic diagram of a text input device, according to an exemplary embodiment.

As shown in Fig. 11, a text input device 1100 according to an exemplary embodiment is illustrated. The device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1101, a memory 1102, a power component 1103, a multimedia component 1104, an audio component 1105, an input/output (I/O) interface 1106, a sensor component 1107, and a communication component 1108.

The processing component 1101 typically controls overall operations of the device 1100, such as the operations associated with display, telephone calls, data communications, camera operations, and recording operations. The processing component 1101 may include one or more processors 1109 to execute instructions to perform all or part of the steps in the above described methods. Moreover, the processing component 1101 may include one or more modules which facilitate the interaction between the processing component 1101 and other components. For instance, the processing component 1101 may include a multimedia module to facilitate the interaction between the multimedia component 1104 and the processing component 1101.

The memory 1102 is configured to store various types of data to support the operation of the device 1100. Examples of such data include instructions for any applications or methods operated on the device 1100, contact data, phonebook data, messages, pictures, video, etc. The memory 1102 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1103 provides power to various components of the device 1100. The power component 1103 may include a power management system, one or more power sources, and any other components associated with the generation, management, and distribution of power in the device 1100.

The multimedia component 1104 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1104 includes a front camera and/or a rear camera. The front camera and the rear camera may receive an external multimedia datum while the device 1100 is in an operation mode, such as a photographing mode or a video mode. Each of the front camera and the rear camera may be a fixed optical lens system or have focus and optical zoom capability.

The audio component 1105 is configured to output and/or input audio signals. For example, the audio component 1105 includes a microphone ("MIC") configured to receive an external audio signal when the device 1100 is in an operation mode, such as a call mode, a recording mode, and a voice recognition mode. The received audio signal may be further stored in the memory 1102 or transmitted via the communication component 1108. In some embodiments, the audio component 1105 further includes a speaker to output audio signals.

The I/O interface 1106 provides an interface between the processing component 1101 and peripheral interface modules, such as a keyboard, a click wheel, buttons, and the like. The buttons may include, but are not limited to, a home button, a volume button, a starting button, and a locking button.

The sensor component 1107 includes one or more sensors to provide status assessments of various aspects of the device 1100. For instance, the sensor component 1107 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1107 may include a proximity sensor configured to detect the presence of nearby objects without any physical contact. The sensor component 1107 may also include a light sensor, such as a CMOS or CCD image sensor, for use in imaging applications. In some embodiments, the sensor component 1107 may also include an accelerometer sensor, a gyroscope sensor, a magnetic sensor, a pressure sensor, or a temperature sensor.

The communication component 1108 is configured to facilitate communication, wired or wirelessly, between the device 1100 and other devices. The device 1100 can access a wireless network based on a communication standard, such as WiFi, 2G, or 3G, or a combination thereof. In one exemplary embodiment, the communication component 1108 receives a broadcast signal or broadcast associated information from an external broadcast management system via a broadcast channel. In one exemplary embodiment, the communication component 1108 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1102, executable by the processor 1109 in the device 1100, for performing the above-described methods. For example, the non-transitory computer-readable storage medium may be a ROM, a RAM, a CD-ROM, a magnetic tape, a floppy disc, an optical data storage device, and the like.

When the instructions in the storage medium are carried out by the processor of the mobile terminal, the mobile terminal is enabled to perform a text input method, including:
judging whether a preset string quick-input mode is set;
when the preset string quick-input mode is set, detecting a preset operation with respect to a preset character in a character input interface; and
when detecting the preset operation with respect to the preset character, inputting a preset string set in the preset string quick-input mode into a text input box.

## Claims

1. A text input method, comprising:
judging (101) whether a preset string quick-input mode is set;
if the preset string quick-input mode is set, detecting (102) a preset operation with respect to a preset character in a character input interface; and
when the preset operation with respect to the preset character is detected, inputting (103) a preset string having been set in the preset string quick-input mode into a text input box.

2. The method of claim 1, further comprising:
receiving (201) a setting operation of starting the preset string quick-input mode in a system input method setting interface; and
starting (205) the preset string quick-input mode.

3. The method of claim 2, further comprising:
after receiving (201) the setting operation of starting the preset string quick-input mode in the system input method setting interface, receiving (202) a string inputted in the system input method setting interface, and using the received string as the preset string.

4. The method of claim 2, further comprising:
after receiving (201) the setting operation of starting the preset string quick-input mode in the system input method setting interface, providing (203) a first setting option for setting the preset character in the system input method setting interface; and
acquiring the preset character set in the first setting option.

5. The method of claim 4, wherein the step (203) of providing the first setting option for setting the preset character in the system input method setting interface comprises:
providing a preset character list in the system input method setting interface, preset characters in the preset character list being obtained based on an input habit of a user and a character layout on a home page of the character input interface; and
the step of acquiring the preset character set in the first setting option comprises:
acquiring a selected character of the preset character list, and using the selected character as the preset character.

6. The method of claim 2, further comprising:
after receiving (201) the setting operation of starting the preset string quick-input mode in the system input method setting interface, providing (204) a second setting option for setting the preset operation in the system input method setting interface, the second setting option including a preset operation list provided in advance; and
acquiring a selected operation of the preset operation list, and using the selected operation as the preset operation.

7. The method of claim 1, wherein when a plurality of preset strings are set in the preset string quick-input mode, the step (103) of inputting the preset string set in the preset string quick-input mode into the text input box comprises:
outputting the plurality of preset strings in a preset position of the text input box;
acquiring a preset string selected by a user; and
inputting the preset string selected by the user into the text input box.

8. A text input device (400), comprising:
a judgment module (401) configured to judge whether a preset string quick-input mode is set;
a detection module (402) configured to, when the preset string quick-input mode is set, detect a preset operation with respect to a preset character in a character input interface; and
an input module (403) configured to, when the preset operation with respect to the preset character is detected, input a preset string set in the preset string quick-input mode into a text input box.

9. The device of claim 8, further comprising:
a first receiving module (404) configured to receive a setting operation of starting the preset string quick-input mode in a system input method setting interface; and
a starting module (405) configured to start the preset string quick-input mode.

10. The device of claim 9, further comprising:
a second receiving module (406) configured to, after receiving the setting operation of starting the preset string quick-input mode in the system input method setting interface, receive a string inputted in the system input method setting interface, and use the received string as the preset string.

11. The device of claim 9, further comprising:
a first providing module (407) configured to, after receiving the setting operation of starting the preset string quick-input mode in the system input method setting interface, provide a first setting option for setting the preset character in the system input method setting interface; and
a first acquiring module (408) configured to acquire the preset character set in the first setting option.

12. The device of claim 11, wherein the first providing module (407) comprises:
a providing submodule (407A) configured to, after receiving the setting operation of starting the preset string quick-input mode in the system input method setting interface, provide a preset character list in the system input method setting interface, preset characters in the preset character list being obtained based on an input habit of a user and a character layout on a home page of the character input interface; and
the first acquiring module (408) comprises:
a first acquiring submodule (408A) configured to acquire a selected character of the preset character list, and use the selected character as the preset character.

13. The device of claim 9, further comprising:
a second providing module (409) configured to, after receiving the setting operation of starting the preset string quick-input mode in the system input method setting interface, provide a second setting option for setting the preset operation in the system input method setting interface, the second setting option including a preset operation list provided in advance; and
a second acquiring module (410) configured to acquire a selected operation of the preset operation list, and use the selected operation as the preset operation.

14. The device of claim 8, wherein when a plurality of preset strings are set in the preset string quick-input mode, the input module (403) comprises:
an output submodule (403A) configured to, when the preset operation with respect to the preset character is detected, output the plurality of preset strings in a preset position of the text input box;
a second acquiring submodule (403B) configured to acquire a preset string selected by a user; and
an input submodule (403C) configured to input the preset string selected by the user into the text input box.

15. A computer program including instructions for executing the steps of a text input method according to any one of claims 1 to 7 when said program is executed by a computer.
